# EUROPÄISCHE PATENTSCHRIFT

(11) **EP 2 936 602 B1**
(45) Veröffentlichungstag und Bekanntmachung des Hinweises auf die Patenterteilung: **21.03.2018**
(21) Anmeldenummer: 13814064.5
(22) Anmeldetag: 04.12.2013
(51) Int. Cl.: H01M 8/24, H01M 8/02, H01M 8/12

(54) **THERMISCH ISOLIERENDE VORRICHTUNG ZUR AUFNAHME MINDESTENS EINER KOMPONENTE EINES SOFC-BRENNSTOFFZELLENSYSTEMS UND VERFAHREN ZUR HERSTELLUNG EINER SOLCHEN VORRICHTUNG**
THERMALLY INSULATED DEVICE FOR RECEIVING OF AT LEAST ONE SOFC COMPONENT AND PROCESS FOR MANUFACTURING THEREOF
DISPOSITIF THERMIQUEMENT ISOLANT POUR LA RECEPTION AU MOINS D'UN COMPOSANT D'UNE PILE À COMBUSTIBLE À OXYDE SOLIDE ET SON PROCÉDÉ DE PRODUCTION

(30) Priorität: 19.12.2012 DE 102012223864
(43) Veröffentlichungstag der Anmeldung: 28.10.2015
(73) Patentinhaber: ElringKlinger AG, 72581 Dettingen/Erms (DE)
(72) Erfinder: BOLTZE, Matthias, 17039 Wulkenzin (DE)
(74) Vertreter: Schumacher & Willsau
(86) Internationale Anmeldenummer: PCT/EP2013/075480
(87) Internationale Veröffentlichungsnummer: WO 2014/095369

(56) Entgegenhaltungen:
- EP-A1- 0 637 091
- DE-A1-102006 060 809
- DE-B3-102010 006 705
- FR-A1- 2 948 342
- US-A1- 2010 068 597
- US-A1- 2010 098 978
- US-A1- 2011 171 544

## Beschreibung

Die vorliegende Erfindung betrifft eine Vorrichtung zur Aufnahme mindestens einer Komponente eines SOFC-Brennstoffzellensystems während dessen Betrieb umfassend eine thermisch isolierende innere Box und eine die innere Box umgebende äußere Box, wobei die innere Box einen Boden, einen Deckel und Seitenplatten umfasst, wobei die äußere Box an dem Boden, dem Deckel und den Seitenplatten der inneren Box anliegt und diese zusammenpresst, und wobei die mindestens eine Komponente, die im Inneren der inneren Box anordenbar ist, einen SOFC-Brennstoffzellenstapel umfasst.

Die vorliegende Erfindung betrifft weiterhin ein Verfahren zur Herstellung einer solchen Vorrichtung.

Die US 2011/0171544 A1 beschreibt ein Brennstoffzellensystem mit einem gasdichten protektiven Gehäuse zur Aufnahme eines Brennstoffzellenstapels.

Die EP 0 637 091 A1 beschreibt eine Gehäuseanordnung umfassend ein äußeres Gehäuse und eine Vielzahl von inneren Gehäusen, die jeweils einen Brennstoffzellenstapel aufnehmen, wobei die inneren Gehäuse in dem äußeren Gehäuse angeordnet werden.

Es ist bekannt, Komponenten eines SOFC-Brennstoffzellensystems zumindest teilweise in einer sogenannten "Hot-Box" anzuordnen, die insbesondere die Komponenten eines SOFC-Brennstoffzellensystems, die während des Betriebs sehr heiß werden, zumindest teilweise aufnehmen kann. Eine derartige Vorrichtung zur Aufnahme von mindestens einer Komponente eines SOFC-Brennstoffzellensystems ist beispielsweise aus der DE 10 2006 060 809 A1 bekannt.

Die US 2010/098978 A1 beschreibt eine Vorrichtung zur Aufnahme eines Brennstoffzellenstapels, wobei ein Verspannungsrahmen eine isolierende Box teilweise umhüllt. Die beschriebene isolierende Box ist aus einem Boden, einem Deckel und Seitenteilen aufge-Der vorliegenden Erfindung liegt dementsprechend die Aufgabe zugrunde, eine Spalten-/Fugenbildung zu verhindern und so die isolierenden Eigenschaften zu verbessern.

Diese Aufgabe wird erfindungsgemäß dadurch gelöst, dass der Boden, der Deckel und die Seitenplatten zumindest teilweise ein Übermaß aufweisen, so dass die innere Box mit einer Presspassung fügbar ist. Durch das Übermaß wird beim Zusammenpressen des Bobaut, die zumindest einzeln an ihren Rändern verlaufende Stege aufweisen. In dem beschriebenen Deckel sind Öffnungen mit umlaufenden Stegen vorgesehen, die zur Aufnahme von bewegbaren Vorspannungsblöcken für die Brennstoffzelle dienen.

Problematisch bei derartigen Konstruktionen ist insbesondere ein Schwinden eines verwendeten Isolationsmaterials, was zu mehr oder weniger großen beziehungsweise tiefen Spalten beziehungsweise Fugen in der Isolation führen kann.

Der vorliegenden Erfindung liegt dementsprechend die Aufgabe zugrunde, eine Spalten-/Fugenbildung zu verhindern und so die isolierenden Eigenschaften zu verbessern.

Diese Aufgabe wird erfindungsgemäß dadurch gelöst, dass der Boden, der Deckel und die Seitenplatten zumindest teilweise ein Übermaß aufweisen, so dass die innere Box mit einer Presspassung fügbar ist. Durch das Übermaß wird beim Zusammenpressen des Bodens, des Deckels und der Seitenplatten, die gemeinsam die thermisch isolierende innere Box bilden, eine Presspassung erreicht. Ein insbesondere anfänglicher Schwund an dem Boden, dem Deckel und/oder den Seitenplatten aufgrund des Drucks und der hohen Temperatur während des Betriebs des SOFC-Brennstoffzellensystems führt daher nicht zu einer Bildung von Spalten und/oder Fugen zwischen dem Boden, dem Deckel und/oder den Seitenplatten, die gemeinsam die isolierende innere Box bilden. Der Begriff "Übermaß" charakterisiert also Abmessungen von Boden, Deckel und Seitenplatten zueinander. Zumindest einige der Abmessungen des Bodens, des Deckels und/oder der Seitenplatten übersteigen die im gefügten Zustand der inneren Box möglichen maximalen Abmessungen. Beim Fügen der inneren Box wird dementsprechend die Presspassung erzeugt. Die Presspassung ermöglicht ein spielfreies/spaltfreies Fügen der Teile der inneren Box durch eine zum Fügen erforderliche mechanische Deformation von Teilen der inneren Box. Durch die mechanische Deformation wird auch nach einem insbesondere anfänglichen Materialschwund an den Teilen der inneren Box die Ausbildung von Wärmebrücken durch Spaltbildung sicher verhindert. Der Boden und/oder der Deckel und/oder die Seitenplatten können beispielsweise aus einem mikroporösen Dämmstoff hergestellt sein. Der Boden und/oder der Deckel und/oder die Seitenplatten können beispielsweise eine Wandstärke zwischen 3 mm und 50 mm, vorzugsweise etwa 40 mm, aufweisen. Die an den jeweiligen Außenseiten des Bodens, des Deckels und den Seitenplatten anliegende äußere Box kann beispielsweise die innere Box so stark von allen Seiten zusammenpressen, dass die gewünschte Presspassung erreicht wird. Der Boden und/oder der Deckel und/oder die Seitenplatten werden beim Fügen dementsprechend durch die äußere Box verformt.

Nützlicherweise kann vorgesehen sein, dass die äußere Box einen äußeren Deckel, einen äußeren Boden und äußere Seitenplatten umfasst. Auf diese Weise ist eine einfache Montage der äußeren Box realisierbar. Der äußere Deckel und/oder der äußere Boden und/oder die äußeren Seitenplatten können beispielsweise aus einem Kunststoff bestehen, der eine gegenüber dem für die isolierende innere Box verwendeten Isolationsmaterial höhere Festigkeit aufweist. Insbesondere können der äußere Deckel und/oder der äußere Boden und/oder die äußeren Seitenplatten aus Polyamid oder Metall hergestellt sein. Der äußere Boden und/oder der äußere Deckel und/oder die äußeren Seitenplatten können beispielsweise in einem Spritzgussverfahren hergestellt werden. Der äußere Boden und/oder der äußere Deckel und/oder die äußeren Seitenplatten können beispielsweise eine Wandstärke zwischen 10 mm und 30 mm, vorzugsweise etwa 20 mm, aufweisen.

Vorteilhafterweise kann vorgesehen sein, dass der äußere Deckel und/oder die äußeren Seitenplatten und/oder der äußere Boden durch Fixiereinrichtungen zu der die innere Box umgebenden äußeren Box verbindbar sind. Auf diese Weise kann die äußere Box die innere Box gleichmäßig von allen Seiten zusammenpressen. Die verwendeten Fixiereinrichtungen können beispielsweise Schrauben und/oder Muttern und/oder Nieten umfassen. Insbesondere können die Fixiereinrichtungen Treibschrauben umfassen, so dass einerseits eine lösbare Verbindung zwischen dem äußeren Deckel und/oder dem äußeren Boden und/oder den äußeren Seitenplatten herstellbar ist und gleichzeitig auf die separate Erzeugung eines Gewindes zur Aufnahme der Treibschraube verzichtet werden kann. Gegebenenfalls kann sogar auf die separate Erzeugung eines Bohrlochs zur Aufnahme der Schraube verzichtet werden. Die Fixiereinrichtungen können weiterhin eine Verklebung zwischen dem äußeren Deckel und/oder dem äußeren Boden und/oder den äußeren Seitenplatten umfassen. Die Verklebung kann beispielsweise nicht wärmebeständig ausgeführt sein, um zunächst eine einfache Vormontage der äußeren Box ohne weitere Fixiereinrichtungen zu ermöglichen. Eine Endmontage der äußeren Box kann dann beispielsweise mithilfe von weiteren einfach lösbaren Fixiereinrichtungen, beispielsweise Schrauben, erfolgen. Auf diese Weise kann bei einem späteren Defekt nach der Inbetriebnahme des SOFC-Brennstoffzellensystems die äußere Box problemlos wieder geöffnet werden, ohne dass auf eine erleichterte Vormontage verzichtet werden muss.

Es kann auch vorgesehen sein, dass der äußere Deckel und/oder der äußere Boden und/oder die äußeren Seitenplatten als versteifte Hohlstruktur ausgeführt sind. Auf diese Weise kann die Vorrichtung insgesamt leichter gefertigt sein, da Material an der äußeren Box eingespart werden kann, ohne dass deren Festigkeit in relevantem Maße reduziert wird. Die versteifte Hohlstruktur kann beispielsweise auf der der inneren Box zugewandten Seite und/oder auf der von der inneren Box abgewandten Seite des äußeren Deckels und/oder des äußeren Bodens und/oder der äußeren Seitenplatten durch eine dünne Deckschicht, die Bestandteil des äußeren Deckels und/oder des äußeren Bodens und/oder der äußeren Seitenplatten sein kann, ausgeführt sein. Diese dünne Deckschicht kann auf der der inneren Box zugewandten Seite beispielsweise einer Druckverteilung dienen. Auf der der inneren Box abgewandten Seite der äußeren Box kann die dünne Deckschicht beispielsweise die Isolationswirkung der Vorrichtung verbessern, da isolierende Luftpolster in der versteiften Hohlstruktur gebildet werden.

Nützlicherweise kann vorgesehen sein, dass weiterhin eine Verspanneinrichtung mit einer Abdeckplatte und einem Verspannklotz vorgesehen sind, wobei der Verspannklotz zumindest teilweise in einer Verspannungsöffnung in der äußeren Box und einer korrespondierenden weiteren Verspannungsöffnung in der inneren Box anordenbar ist, und wobei die Abdeckplatte an der äußeren Box fixierbar ist, so dass der Verspannklotz zumindest teilweise in das Innere der inneren Box gedrückt wird. Durch das Vorsehen der Verspanneinrichtung kann ein im Inneren der inneren Box angeordneter Brennstoffzellenstapel in seiner bevorzugten thermisch bedingten Längenausdehnungsrichtung senkrecht zur Stapelrichtung der einzelnen Brennstoffzellen gesondert zusammengepresst werden. Auf diese Weise kann die Dichtigkeit eines in der inneren Box angeordneten SOFC-Brennstoffzellenstapels auch bei einem betriebsbedingten Schwund der üblicherweise verwendeten Glasdichtungen sichergestellt werden.

Weiterhin kann auch vorgesehen sein, dass die in dem Inneren der inneren Box anordenbare mindestens eine Komponente einen Kraftstoffreformer und/oder eine Nachbrenner-Wärmeübertragereinheit umfasst. Auf diese Weise können alle oder zumindest wesentliche Teile des SOFC-Brennstoffzellensystems, insbesondere die Komponenten des SOFC-Brennstoffzellensystems, die während des Betriebs besonders heiß werden, im Inneren einer einzigen isolierenden Box gemeinsam angeordnet werden.

Es kann auch vorgesehen sein, dass in der äußeren Box und in der inneren Box korrespondierende Versorgungsöffnungen vorgesehen sind, durch die Versorgungsleitungen führbar sind, wobei über die Versorgungsleitungen Brennstoff und Luft dem Inneren der inneren Box zuführbar sind und Abgas und erzeugter Strom aus dem Inneren der inneren Box abführbar sind. Durch das Vorsehen korrespondierender Versorgungsöffnungen in der äußeren Box und in der inneren Box können besonders leicht Anschlussleitungen zu den im Inneren der Vorrichtung angeordneten Komponenten des SOFC-Brennstoffzellensystems geführt werden. Insbesondere sind auf diese Weise keine in Wandbereichen der äußeren Box und/oder in Wandbereichen der inneren Box aufwändig herzustellende und zu schließende Anschlüsse vorzusehen. Die Versorgungsleitungen können leicht durch die korrespondierenden Versorgungsöffnungen hindurch gesteckt werden.

In diesem Zusammenhang kann vorgesehen sein, dass die Versorgungsöffnungen in der äußeren Box als mindestens ein Einsatz ausgeführt sind, der aus einem Isolationsmaterial gefertigt ist, wobei das Isolationsmaterial eine gegenüber dem Rest der äußeren Box erhöhte Festigkeit aufweist. Auf diese Weise kann insbesondere sichergestellt werden, dass an den Versorgungsleitungen sich eventuell ausbildende Wärmebrücken die äußere Box nicht beschädigen. Weiterhin kann auch eine während des Betriebs des SOFC-Brennstoffzellensystems sichere und präzise Führung der Versorgungsleitungen durch die Versorgungsöffnungen gewährleistet werden, so dass insbesondere die in der inneren Box vorgesehenen Versorgungsöffnungen nicht durch die Versorgungsleitungen beschädigt, beispielsweise geweitet werden.

Es kann auch vorgesehen sein, dass die äußere Box mindestens eine Trägervorrichtung für ein Steuergerät und/oder für ein Nebenaggregat des SOFC-Brennstoffzellensystems umfasst, wobei das Steuergerät zur Steuerung der mindestens einen im Inneren der inneren Box anordenbaren Komponente eingerichtet ist. Auf diese Weise können weitere Komponenten des SOFC-Brennstoffzellensystems gemeinsam mit der Vorrichtung montierbar und gegebenenfalls wechselbar sein. Weiterhin wird auf diese Weise eine Mehrfachnutzung der äußeren Box ermöglicht.

Zusätzlich kann vorgesehen sein, dass die mindestens eine Trägervorrichtung an der äußeren Box montierbar und/oder einstückig mit der äußeren Box gefertigt ist. Wenn die Trägervorrichtung an der einheitlich gestalteten äußeren Box montierbar ist, kann eine variable Gestaltung der äußeren Box erreicht werden, so dass eine Individualisierung der Anordnung von an der Trägervorrichtung anordenbaren Komponenten möglich wird. Beispielsweise kann je nach vorhandenen Platzverhältnissen die Positionierung einzelner Komponenten variiert werden. Ebenso können unterschiedliche Komponenten, beispielsweise hinsichtlich ihrer Leistungsfähigkeit unterschiedliche Komponenten, die unterschiedliche Trägervorrichtungen benötigen, an der einheitlich gestalteten äußeren Box montierbar sein. Wenn die Trägervorrichtung einstückig mit der äußeren Box gefertigt ist, beispielsweise in einem Spritzgussverfahren aus demselben Material wie der Rest der äußeren Box, kann die äußere Box ohne zusätzlichen Aufwand zur Montage von Komponenten an der Außenseite der äußeren Box genutzt werden.

Das erfindungsgemäße Verfahren baut auf dem gattungsgemäßen Verfahren zur Herstellung der erfindungsgemäßen Vorrichtung dadurch auf, dass die innere Box mit einer Presspassung gefügt wird.

Die Erfindung wird nun mit Bezug auf die begleitende Zeichnung anhand einer bevorzugten Ausführungsform beispielhaft erläutert.

Es zeigt:

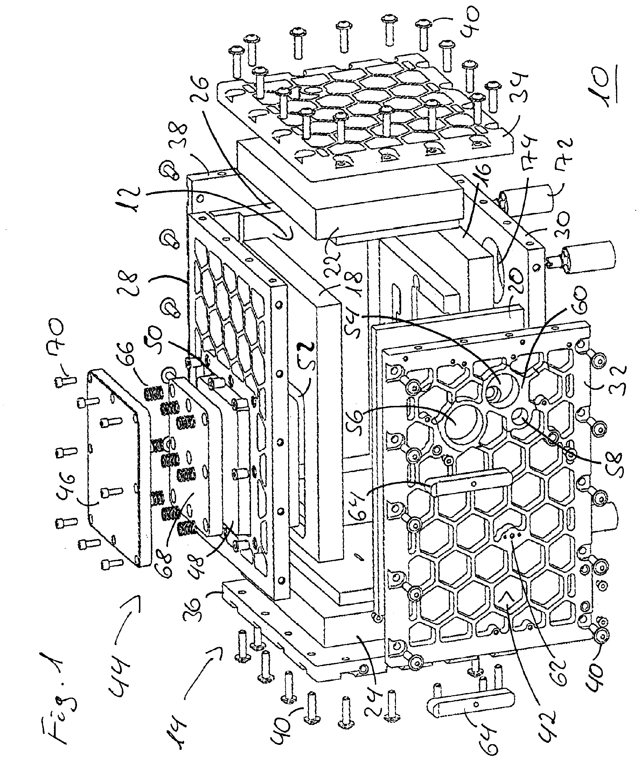

- Figur 1: eine dreidimensionale Explosionsdarstellung einer Vorrichtung zur Aufnahme mindestens einer Komponente eines SOFC-Brennstoffzellensystems.

Figur 1 zeigt eine dreidimensionale Explosionsdarstellung einer Vorrichtung 10 zur Aufnahme mindestens einer Komponente eines SOFC-Brennstoffzellensystems. Die Vorrichtung 10 umfasst einen innere Box 12 und eine äußere Box 14. Die äußere Box 14 hüllt die innere Box 12 ein. Im Inneren der inneren Box 12 können in Figur 1 nicht dargestellte Komponenten eines SOFC-Brennstoffzellensystems angeordnet sein. Diese Komponenten können beispielsweise ein SOFC-Brennstoffzellenstapel und/oder ein Kraftstoffreformer und/oder eine Nachbrenner-Wärmeübertragereinheit sein. Die innere Box 12 umfasst einen Boden 16, einen Deckel 18 und Seitenplatten 20, 22, 24 und 26. Der Boden 16, und/oder der Deckel 18 und/oder die Seitenplatten 20, 22, 24, und 26 sind aus einem thermisch isolierenden Material, beispielsweise einem mikroporösen Dämmstoff, hergestellt. Der Boden 16 und/oder der Deckel 18 und/oder die Seitenplatten 20, 22, 24 und 26 können wie in Figur 1 dargestellt optional an ihren Rändern eine geringere Materialstärke als in ihrer jeweiligen Mitte aufweisen, so dass an ihren jeweiligen Rändern insbesondere umlaufende Stege mit geringerer Materialstärke entstehen können. Auf diese Weise kann beim Zusammenführen der Bestandteile der inneren Box 12 die Bildung von durchgehenden Fugen, die bei einem Materialschwund des isolierenden Materials zu einem durchgehenden, die Isolationswirkung der inneren Box 12 reduzierenden Spalt führen würden, verhindert werden. Der Boden 16, der Deckel 18 und die Seitenplatten, 20, 22, 24 und 26 sind teilweise mit einem Übermaß hergestellt, so dass ein vollständiges Fügen der inneren Box 12 nur unter Aufwendung eines auf die Außenseiten der inneren Box 12 wirkenden Drucks, der durch die äußere Box 14 bereitgestellt wird, möglich ist. Beim Fügen der inneren Box 12 wird eine Presspassung erzeugt.. Der Begriff "Übermaß" charakterisiert also Abmessungen des Bodens 16, des Deckels 18 und der Seitenplatten 20, 22, 24 und 26 zueinander. Zumindest einige der Abmessungen des Bodens 16, des Deckels 18 und/oder der Seitenplatten 20, 22, 24 und 26 übersteigen die im gefügten Zustand der inneren Box 12 möglichen maximalen Abmessungen. Beim Fügen der inneren Box 12 wird dementsprechend die Presspassung erzeugt. Die Presspassung ermöglicht ein spielfreies/spaltfreies Fügen der Teile der inneren Box 12 durch eine zum Fügen erforderliche mechanische Deformation des Bodens 16, des Deckels 18 und/oder der Seitenplatten 20, 22, 24, 26 der inneren Box 12. Durch die mechanische Deformation wird auch nach einem insbesondere anfänglichen Materialschwund an den Teilen der inneren Box 12 die Ausbildung von Wärmebrücken durch Spaltbildung sicher verhindert.

Die äußere Box 14 kann einen äußeren Deckel 28, einen äußeren Boden 30 und äußere Seitenplatten 32, 34, 36 und 38 umfassen. Der äußere Deckel 28, der äußere Boden 30 und die äußern Seitenplatten 32, 34, 36 und 38 können beispielsweise mithilfe von Fixiereinrichtungen 40 zu der äußeren Box 14 gefügt werden. Im gefügten Zustand üben die Innenseiten des äußeren Deckels 28, des äußeren Bodens 30 und der äußeren Seitenplatten 32, 34, 36 und 38 gleichmäßige Druckkräfte auf die Außenseiten der inneren Box 12 aus, so dass diese durch eine Presspassung gefügt wird. Die Fixiereinrichtungen 40 können beispielsweise Schrauben umfassen. Auf diese Weise können der äußere Deckel 28, der äußere Boden 30 und die äußeren Seitenplatten 32, 34, 36 und 38 miteinander verschraubt werden. Wie in Figur 1 dargestellt können in dem äußeren Deckel 28 und/oder dem äußeren Boden 30 und/oder den äußeren Seitenplatten 32, 34, 36 und 38 Löcher zur Aufnahme der als Schrauben ausgeführten Fixiereinrichtungen 40 vorgesehen sein. Wenn die Fixiereinrichtungen 40 als Treibschrauben ausgeführt sind, können die Löcher oder zumindest in den Löchern angeordnete Gewinde, die mit den Fixiereinrichtungen 40 wechselwirken, entfallen. Die Treibschrauben können die Löcher und/oder die Gewinde bei der Montage, das heißt beim Einschrauben, selbst erzeugen. Zur Erleichterung der Montage der äußeren Box 14, kann eine in Figur 1 nicht explizit dargestellte Verklebung zwischen dem äußeren Deckel 28 und den äußeren Seitenplatten, 32, 34, 36 und 38 sowie zwischen dem äußeren Boden 30 und den äußeren Seitenplatten 32, 34, 36 und 38 vorgesehen sein. Diese Verklebung kann als Bestandteil der Fixiereinrichtungen 40 angesehen werden. Wenn die Verklebung vorgesehen ist, kann je nach Bedarf auf weitere Fixiereinrichtungen, beispielsweise in Form der in Figur 1 dargestellten Schrauben verzichtet werden. Wenn die Fixiereinrichtung 40 sowohl die in Figur 1 dargestellten Schrauben als auch einen Verklebung zwischen den einzelnen Teilen der äußeren Box 14 umfasst, kann zur Erleichterung einer Demontage der äußeren Box 14 vorgesehen sein, dass die verwendete Verklebung nicht wärmebeständig oder wasserlöslich ist. Die Montage der äußeren Box 14 kann dann in eine Vormontage und eine Endmontage unterteilt werden. Die Vormontage kann das Zusammenfügen der äußeren Box 14 mithilfe der Verklebung umfassen. Die Endmontage kann das abschließende Einschrauben von als Schrauben ausgeführten weiteren Fixiereinrichtungen 40 umfassen. Auf diese Weise kann während der Endmontage bereits auf eine Sicherung der äußeren Box 14 verzichtet werden. Wenn die verwendete Verklebung nicht wärmebeständig oder nicht wasserfest ist, kann auch eine einfache Demontage der äußeren Box 14 ermöglicht werden. Der äußere Deckel 28 und/oder der äußere Boden 30 und/oder die äußeren Seitenplatten 32, 34, 36 und 38 können, wie in Figur 1 dargestellt, eine Hohlstruktur 42 aufweisen. Die Hohlstruktur 42 kann beispielsweise eine einfache Wabenstruktur sein. Die Hohlstruktur 42 ermöglicht eine Einsparung von Material, die zu einer Gewichtseinsparung führt, ohne dass die Festigkeit der äußeren Box 14 beeinträchtigt wird. Die Hohlstruktur 42 kann durch dünne Platten, die zu dem äußeren Deckel 28, dem äußeren Boden 30, und den äußeren Seitenplatten 32, 34, 36 und 38 zugerechnet werden, abgedeckt sein. Auf diese Weise kann einerseits eine gleichmäßige Verteilung der auf die innere Box 12 wirkenden Druckkräfte und andererseits eine Verbesserung der isolierenden Wirkung der Vorrichtung 10 durch die in der Hohlstruktur 42 eingeschlossenen Luftpolster erreicht werden.

Die Vorrichtung 10 kann weiterhin eine Verspanneinrichtung 44 umfassen. Die Verspanneinrichtung 44 kann, wie in Figur 1 dargestellt, eine Abdeckplatte 46, einen Verspannklotz 48, eine Druckverteilungsplatte 68 und elastische Elemente 66 umfassen. Der Verspannklotz 48 kann im montierten Zustand der Verspanneinrichtung 44 durch eine Verspannungsöffnung 50 und eine korrespondierende weitere Verspannungsöffnung 52 in das Innere der inneren Box 12 gedrückt werden, und dabei einen in Figur 1 nicht dargestellten Brennstoffzellenstapel verspannen. Die hierfür notwendige Verspannkraft kann durch das Fixieren der Abdeckplatte 46 mithilfe von Befestigungselementen 70 an dem äußeren Deckel 28 erreicht werden, wobei die aufgebrachte Kraft über die elastischen Elemente 66 und die Druckverteilungsplatte 68 gleichmäßig auf den Verspannklotz 48 übertragen werden kann. Es ist möglich, dass durch das Entfernen der Verspanneinrichtung 44 ein im Inneren der Vorrichtung 10 angeordneter Brennstoffzellenstapel entfernbar ist. Weiterhin ist es möglich, dass der Brennstoffzellenstapel erst nach dem Fügen der inneren Box 12 und der äußeren Box 14 in die Vorrichtung 10 eingesetzt wird, bevor diese abschließend durch die Verspanneinrichtung 44 verschlossen wird. Die von der Verspanneinrichtung 44 aufgebrachte Verspannkraft kann über die elastischen Elemente 66 eingestellt werden und beispielsweise zwischen 500 N und 600 N, vorzugsweise etwa 550 N betragen. Die elastischen Elemente 66 können beispielsweise als Spiralfedern ausgeführt sein.

Die äußere Box 14 kann Versorgungsöffnungen 54, 56, 58 und 74 aufweisen. Die Versorgungsöffnungen 54, 56, 58 und 74 können durch die äußere Box 14 und die innere Box 12 hindurchreichen. Denkbar ist allerdings auch, dass die Versorgungsöffnungen 54, 56, 58 und 74 nur durch die äußere Box 14 hindurchreichen. Beispielsweise können die Versorgungsöffnungen 54, 56 und 58 in der vorderen äußeren Seitenplatte 32 angeordnet sein.

Die Versorgungsöffnung 74 kann beispielsweise in dem äußeren Boden 30 angeordnet sein. Die Versorgungsöffnungen 54, 56, 58 und 74 können der Zuführung von Brennstoff und Luft sowie der Abführung von erzeugter elektrischer Energie und Abgas dienen. Insbesondere wenn die Versorgungsöffnungen 54, 56 und 58 durch die äußere Box 14 und die innere Box 12 hindurchreichen, kann in der äußeren Box 14 ein Einsatz 60 vorgesehen sein, der aus einem wärmeisolierenden Material besteht, welches eine hohe Steifigkeit aufweist. Auf diese Weise können Wärmebrücken an durch die Versorgungsöffnungen 54, 56 und 58 hindurchgeführten Versorgungsleitungen verhindert werden, die eventuell eine Beschädigung der äußeren Box 14 durch Hitze verursachen könnten. Weiterhin kann auf diese Weise einer Beschädigung der Versorgungsöffnungen 54, 56 und 58 in der inneren Box 12, beispielsweise durch ein Aufweiten, verhindert werden, da die Versorgungsleitungen präzise durch die Öffnungen geführt werden. Auf diese Weise wird eine Spaltbildung zwischen den Versorgungsleitungen und der inneren Box 12 verhindert, die die isolierende Wirkung der inneren Box 12 reduzieren kann.

An der äußeren Box 14, beispielsweise an der vorderen äußeren Seitenplatte 32 können Trägervorrichtungen 62, 64 angeordnet sein. In Figur 1 dargestellt ist beispielsweise die Trägervorrichtung 62, die einstückig mit der vorderen äußeren Seitenplatte 32 gefertigt ist. Die Trägervorrichtung 62 kann beispielsweise als Loch zur Aufnahme einer in Figur 1 nicht dargestellten Montageeinrichtung an einer Verdickung der Hohlstruktur 42 ausgeführt sein. Weiterhin sind in Figur 1 Trägervorrichtungen 64 dargestellt, die an der vorderen äußeren Seitenplatte 32 montierbar sein können und ihrerseits die Montage von weiteren Komponenten des SOFC-Brennstoffzellensystems erlauben. Auch die Trägervorrichtung 62 kann die Montage von weiteren Komponenten des SOFC-Brennstoffzellensystems an der Vorrichtung 10 erlauben.

An dem äußeren Boden 30 können weiterhin Fußelemente 72 angeordnet sein, die eine Fixierung der Vorrichtung 10 beispielsweise in einem in Figur 1 nicht dargestellten Gehäuse des SOFC-Brennstoffzellensystems erlauben kann.

Eine dünne Abdeckung der Hohlstruktur 42 ist beispielsweise bei dem äußeren Boden 30 erkennbar. Alternativ ist es möglich den äußeren Deckel 28 und/oder den äußeren Boden 30 und/oder die äußeren Seitenplatten 32, 34, 36 und 38 massiv, das heißt insbesondere ohne Hohlstruktur 42, auszuführen.

Zur Montage der Vorrichtung 10 wird zunächst der Boden 16 auf den äußeren Boden 30 gestapelt. Anschließend können die im Inneren der Box 12 anzuordnenden Komponenten des SOFC-Brennstoffzellensystems auf dem inneren Boden 16 vormontiert werden. Danach können die Seitenplatten, 20, 22, 24 und 26 lose an den Boden 16 herangeführt werden. Durch das Auflegen des Deckels 18 können die Seitenplatten, 20, 22, 24 und 26 zunächst provisorisch in dieser Position gehalten werden. Jetzt erfolgt die Montage der äußeren Seitenplatten 32, 34, 36 und 38, wobei vorzugsweise zunächst zwei gegenüberliegende äußere Seitenplatten an dem äußeren Boden 30, insbesondere die vordere äußere Seitenplatte 32 und die hintere äußere Seitenplatte 38, fixiert werden. Schließlich kann der äußere Deckel 28 mit den übrigen Teilen der äußeren Box 14 zusammengeführt werden, so dass sowohl die äußere Box 14 als auch die innere Box 12 montiert sind. Das Einsetzen der Verspanneinrichtung 44 kann nach der Montage des äußeren Deckels 28 erfolgen.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Vorrichtung
- 12: innere Box
- 14: äußere Box
- 16: Boden
- 18: Deckel
- 20: Seitenplatte
- 22: Seitenplatte
- 24: Seitenplatte
- 26: Seitenplatte
- 28: äußerer Deckel
- 30: äußerer Boden
- 32: äußere Seitenplatte
- 34: äußere Seitenplatte
- 36: äußere Seitenplatte
- 38: äußere Seitenplatte
- 40: Fixiereinrichtung
- 42: Hohlstruktur
- 44: Verspanneinrichtung
- 46: Abdeckplatte
- 48: Verspannklotz
- 50: Verspannungsöffnung
- 52: weitere Verspannungsöffnung
- 54: Versorgungsöffnung
- 56: Versorgungsöffnung
- 58: Versorgungsöffnung
- 60: Einsatz
- 62: Trägervorrichtung
- 64: Trägervorrichtung
- 66: elastisches Element
- 68: Druckverteilungsplatte
- 70: Befestigungselement
- 72: Fußelement
- 74: Versorgungsöffnung

## Patentansprüche

1. Vorrichtung (10) zur Aufnahme mindestens einer Komponente eines SOFC-Brennstoffzellensystems während dessen Betrieb umfassend
- eine thermisch isolierende innere Box (12) und
- eine die innere Box (12) umgebende äußere Box (14),
- wobei die innere Box (12) einen Boden (16), einen Deckel (18) und Seitenplatten (20, 22, 24, 26) umfasst,
- wobei die äußere Box (14) an dem Boden (16), dem Deckel (18) und den Seitenplatten (20, 22, 24, 26) der inneren Box (12) anliegt und diese zusammenpresst, und
- wobei die mindestens eine im Inneren der inneren Box (12) anordenbare Komponente einen SOFC-Brennstoffzellenstapel umfasst.
**dadurch gekennzeichnet, dass** der Boden (16), der Deckel (18) und die Seitenplatten (20, 22, 24, 26) zumindest teilweise ein Übermaß aufweisen, und die innere Box (12) mit einer Presspassung zusammengefügt wird.

2. Vorrichtung (10) nach Anspruch 1, **dadurch gekennzeichnet, dass** die äußere Box (14) einen äußeren Deckel (28), einen äußeren Boden (30) und äußere Seitenplatten (32, 34, 36, 38) umfasst.

3. Vorrichtung (10) nach Anspruch 2, **dadurch gekennzeichnet, dass** der äußere Deckel (28) und/oder die äußeren Seitenplatten (32, 34, 36, 38) und/oder der äußere Boden (30) durch Fixiereinrichtungen (40) zu der die innere Box (12) umgebenden äußeren Box (14) verbindbar sind.

4. Vorrichtung (10) nach Anspruch 2 oder 3, **dadurch gekennzeichnet, dass** der äußere Deckel (28) und/oder der äußere Boden (30) und/oder die äußeren Seitenplatten (32, 34, 36, 38) als versteifte Hohlstruktur (42) ausgeführt sind.

5. Vorrichtung (10) nach einem der Ansprüche 1 bis 4, **dadurch gekennzeichnet, dass** weiterhin eine Verspanneinrichtung (44) mit einer Abdeckplatte (46) und einem Verspannklotz (48) vorgesehen sind, wobei der Verspannklotz (48) zumindest teilweise in einer Verspannungsöffnung (50) in der äußeren Box (14) und einer korrespondierenden weiteren Verspannungsöffnung (52) in der inneren Box (12) anordenbar ist, und wobei die Abdeckplatte (46) an der äußeren Box (14) fixierbar ist, so dass der Verspannklotz (48) zumindest teilweise in das Innere der inneren Box (12) gedrückt wird.

6. Vorrichtung (10) nach einem der vorhergehenden Ansprüche, **dadurch gekennzeichnet, dass** die in dem Inneren der inneren Box (12) anordenbare mindestens eine Komponente einen Kraftstoffreformer und/oder eine Nachbrenner-Wärmeübertragereinheit umfasst.

7. Vorrichtung (10) nach einem der vorhergehenden Ansprüche, **dadurch gekennzeichnet, dass** in der äußeren Box (14) und in der inneren Box (12) korrespondierende Versorgungsöffnungen (54, 56, 58, 74) vorgesehen sind, durch die Versorgungsleitungen führbar sind, wobei über die Versorgungsleitungen Brennstoff und Luft dem Inneren der inneren Box (12) zuführbar sind und Abgas und erzeugter Strom aus dem Inneren der inneren Box (12) abführbar sind.

8. Vorrichtung (10) nach Anspruch 7, **dadurch gekennzeichnet, dass** die Versorgungsöffnungen (54, 56, 58) in der äußeren Box (14) als mindestens ein Einsatz (60) ausgeführt sind, der aus einem Isolationsmaterial gefertigt ist, wobei das Isolationsmaterial eine gegenüber dem Rest der äußeren Box (14) erhöhte Festigkeit aufweist.

9. Vorrichtung (10) nach einem der vorhergehenden Ansprüche, **dadurch gekennzeichnet, dass** die äußere Box (14) mindestens eine Trägervorrichtung (62, 64) für ein Steuergerät und/oder für ein Nebenaggregat des SOFC-Brennstoffzellensystems umfasst, wobei das Steuergerät zur Steuerung der mindestens einen im Inneren der inneren Box (12) anordenbaren Komponente eingerichtet ist.

10. Vorrichtung (10) nach Anspruch 9, **dadurch gekennzeichnet, dass** die mindestens eine Trägervorrichtung (62, 64) an der äußeren Box (14) montierbar und/oder einstückig mit der äußeren Box (14) gefertigt ist.

11. Verfahren zur Herstellung einer Vorrichtung (10) gemäß Anspruch 1, wobei der Boden (16), der Deckel (18) und die Seitenplatten (20, 22, 24, 26) der inneren Box (12) durch die äußere Box (14) zusammengepresst werden, **dadurch gekennzeichnet, dass** die innere Box (12) in einer Presspassung gefügt wird.

## Claims

1. An apparatus (10) for accommodating at least one component of an SOFC fuel cell system during its operation comprising
- a thermally insulating inner box (12), and
- an outer box (14) surrounding the inner box (12),
- wherein the inner box (12) comprises a base (16), a cover (18) and side panels (20, 22, 24, 26),
- wherein the outer box (14) bears against the base (16), the cover (18) and the side panels (20, 22, 24, 26) of the inner box (12) and presses them together, and
- wherein the at least one component that can be arranged in the interior of the inner box (12) comprises an SOFC-fuel cell stack,
**characterised in that** the base (16), the cover (18) and the side panels (20, 22, 24, 26) are, at least partly, over-dimensioned and the inner box (12) is assembled by press-fitting.

2. The apparatus (10) according to claim 1, **characterised in that** the outer box (14) comprises an outer cover (28), an outer base (30), and outer side panels (32, 34, 36, 38).

3. The apparatus (10) according to claim 2, **characterised in that** the outer cover (28) and/or the outer side panels (32, 34, 36, 38) and/or the outer base (30) are connectable to the outer box (14) surrounding the inner box (12) by means of fixing means (40).

4. The apparatus (10) according to claim 2 or 3, **characterised in that** the outer cover (28) and/or the outer base (30) and/or the outer side panels (32, 34, 36, 38) are designed as a reinforced hollow structure (42).

5. The apparatus (10) according to one of the claims 1 to 4, **characterised in that** further a clamping device (44) comprising a cover plate (46) and a clamping block (48) are provided, wherein the clamping block (48) can, at least partly, be arranged in a clamping orifice (50) in the outer box (14) and a corresponding further clamping orifice (52) in the inner box (12), and wherein the cover plate (46) is fixable on the outer box (14) so that the clamping block (48) is, at least partly, pressed into the interior of the inner box (12).

6. The apparatus (10) according to one of the preceding claims, **characterised in that** the at least one component which can be positioned in the interior of the inner box (12) comprises a fuel reformer and/or an afterburner heat exchanger unit.

7. The apparatus (10) according to one of the preceding claims, **characterised in that** corresponding supply orifices (54, 56, 58, 74) through which supply lines can be passed are provided in the outer box (14) and in the inner box (12), wherein fuel and air can be supplied to the interior of the inner box (12), and waste gas and generated electric current can be lead out of the interior of the inner box (12) via the supply lines.

8. The apparatus (10) according to claim 7, **characterised in that** the supply orifices (54, 56, 58) in the outer box (14) are designed as at least one insert (60) formed of an insulating material, wherein the insulating material has an increased stability as compared to the rest the outer box (14).

9. The apparatus (10) according to one of the preceding claims, **characterised in that** the outer box (14) comprises at least one support device (62, 64) for a control device and/or for an ancillary unit of the SOFC fuel cell system, wherein the control device is designed for controlling the at least one component which can be positioned in the interior of the inner box (12).

10. The apparatus (10) according to claim 9, **characterised in that** the at least one support device (62, 64) is mountable on the outer box (14) and/or integrally formed with the outer box (14).

11. A method for producing an apparatus (10) according to claim 1, wherein the base (16), the cover (18) and the side panels (20, 22, 24, 26) of the inner box (12) are pressed against each other by the outer box (14), **characterised in that** the inner box (12) is assembled by press-fitting.

## Revendications

1. Dispositif (10) pour la réception d'au moins un composant d'un système de cellule électrochimique SOFC pendant son fonctionnement comprenant
- une boîte interne thermo-isolante (12) et
- une boîte externe (14) entourant la boîte interne (12),
- la boîte interne (12) comportant un fond (16), un couvercle (18) et des plaques latérales (20, 22, 24, 26),
- la boîte externe (14) étant appliquée sur le fond (16), le couvercle (18) et les plaques latérales (20, 22, 24, 26) de la boîte interne (12) et pressant ceux-ci les uns contre les autres et
- l'au moins un composant pouvant être disposé à l'intérieur de la boîte interne (12) comprenant un empilement de cellules électrochimiques SOFC ;
**caractérisé en ce que** le fond (16), le couvercle (18) et les plaques latérales (20, 22, 24, 26) sont surdimensionnés au moins en partie et la boîte interne (12) est assemblée avec un ajustage serré.

2. Dispositif (10) selon la revendication 1, **caractérisé en ce que** la boîte externe (14) comprend un couvercle externe (28), un fond externe (30) et des plaques latérales externes (32, 34, 36, 38).

3. Dispositif (10) selon la revendication 2, **caractérisé en ce que** le couvercle externe (28) et / ou les plaques latérales externes (32, 34, 36, 38) et / ou le fond externe (30) peuvent être reliés à la boîte externe (14) entourant la boîte interne (12) au moyen des dispositifs de fixation (40).

4. Dispositif (10) selon la revendication 2 ou 3, **caractérisé en ce que** le couvercle externe (28) et / ou le fond externe (30) et / ou les plaques latérales externes (32, 34, 36, 38) sont réalisés en tant que structure creuse rigidifiée (42).

5. Dispositif (10) selon une des revendications 1 à 4, **caractérisé en ce qu'un** dispositif de contrainte (44) avec une plaque de couverture (46) et un bloc de contrainte (48) est prévu en outre, le bloc de contrainte (48) pouvant être disposé du moins partiellement dans une ouverture de contrainte (50) dans la boîte externe (14) et dans une autre ouverture de contrainte (52) correspondante dans la boîte interne (12) et la plaque de couverture (46) pouvant être fixée sur la boîte externe (14), de sorte à ce que le bloc de contrainte (48) est pressé du moins partiellement dans l'intérieur de la boîte interne (12).

6. Dispositif (10) selon une des revendications précédentes, **caractérisé en ce que** l'au moins un composant pouvant être disposé à l'intérieur de la boîte interne (12) comprend un réformateur de carburant et / ou une unité de transfert de chaleur de postcombustion.

7. Dispositif (10) selon une des revendications précédentes, **caractérisé en ce que** dans la boîte externe (14) et dans la boîte interne (12) sont prévues des ouvertures d'alimentation correspondantes (54, 56, 58, 74) à travers lesquelles des conduites d'alimentation peuvent être posées, le combustible et l'air pouvant être amenés à l'intérieur de la boîte interne (12) et le gaz de combustion et l'électricité produite pouvant être évacués de l'intérieur de la boîte interne (12) par les conduites d'alimentation.

8. Dispositif (10) selon la revendication 7, **caractérisé en ce que** les ouvertures d'alimentation (54, 56, 58) dans la boîte externe (14) sont réalisées sous forme d'au moins un insert (60) fabriqué à partir d'un matériau isolant, le matériau isolant présentant une résistance élevée par rapport au reste de la boîte externe (14).

9. Dispositif (10) selon une des revendications précédentes, **caractérisé en ce que** la boîte externe (14) comprend au moins un dispositif de support (62, 64) pour une unité de commande et / ou une unité annexe du système de cellule électrochimique SOFC, l'unité de commande étant conçue pour commander l'au moins un composant pouvant être disposé à l'intérieur de la boîte interne (12).

10. Dispositif (10) selon la revendication 9, **caractérisé en ce que** l'au moins un dispositif de support (62, 64) peut être monté sur la boîte externe (14) et / ou est fabriqué en une seule pièce avec la boîte externe (14).

11. Procédé de fabrication d'un dispositif (10) selon la revendication 1, dans lequel le fond (16), le couvercle (18) et les plaques latérales (20, 22, 24, 26) de la boîte interne (12) peuvent être pressés par la boîte externe (14), **caractérisé en ce que** la boîte interne (12) est assemblée dans un ajustage serré.
